# EUROPÄISCHE PATENTSCHRIFT

(11) **EP 0 731 269 B1**
(45) Veröffentlichungstag und Bekanntmachung des Hinweises auf die Patenterteilung: **09.06.1999**
(21) Anmeldenummer: 95117222.0
(22) Anmeldetag: 02.11.1995
(51) Int. Cl.: F02F 11/00

(54) **Zylinderkopfdichtung**
Cylinder head gasket
Joint de culasse

(30) Priorität: 02.03.1995 DE 19597231
(43) Veröffentlichungstag der Anmeldung: 11.09.1996
(73) Patentinhaber: Federal-Mogul Sealing Systems GmbH, 57562 Herdorf (DE)
(72) Erfinder: Bohl, Alfons, D-57562 Herdorf (DE); Köhler, Hubert, Ing., D-57518 Betzdorf (DE); Wagner, Franz-Josef, Ing., D-57518 Steineroth (DE)

(56) Entgegenhaltungen:
- DE-A- 3 409 054
- DE-C- 4 337 758

## Beschreibung

Die Erfindung betrifft eine Zylinderkopfdichtung für Brennkraftmaschinen mit einem an einen Motorblock seitlich angeschraubten Ketten- oder Räderkasten zur Aufnahme der Antriebsmittel zwischen Kurbelwelle und Nockenwelle, wobei der Ketten- oder Räderkasten einer Zusatzdichtung in der Ebene der Zylinderkopfdichtung aufweist.

Bei Brennkraftmaschinen mit angeschraubtem Ketten- oder Räderkasten ist die Abdichtung der Flanschflächen problematisch, da drei Schnittstellen zusammentreffen. Zwischen den Flanschflächen des Ketten- oder Räderkastens und dem Motorblock können herstellungsbedingt unterschiedlich große Spalten bestehen. Zu diesem Höhenversatz der Bauteile können noch die Unterschiede in den Höhen der dazwischen angeordneten Dichtungen kommen. Bei einigen Brennkraftmaschinen erfolgt die Abdichtung des Ketten- oder Räderkastens bezüglich des Motorblocks über eine Zylinderkopfdichtung mit integrierter Dichtung für den Ketten- oder Räderkasten. Die DE 43 37 758 C 1 offenbart eine solche Zylinderkopfdichtung. Zur Abdichtung der problematischen Schnittstellen sind bei dieser Zylinderkopfdichtung Elastomerkörper in Aussparungen eingesetzt, die axial aus der Oberfläche der Dichtung hervorstehen. Die Abdichtung des Motorblocks und des Ketten- oder Räderkastens über eine Zylinderkopfdichtung mit integrierter Ketten- oder Räderkastendichtung hat den Nachteil, daß bei Undichtigkeiten im Flanschbereich des Ketten- oder Räderkastens die Zylinderkopfdichtung mit ausgewechselt werden muß.

Aus der DE-A-3409054 ist eine gattungsgemäße Zylinderkopfdichtung für Brennkraftmaschinen zu entnehmen. Die Zylinderkopfdichtung korrespondiert nur mit den Flanschflächen von Zylinderkopf und Motorblock. Die Abdichtung des angeschraubten Ketten- oder Räderkastens in der Ebene der Zylinderkopfdichtung ist mit Hilfe von einer Zusatzdichtung vorgesehen. Die Zusatzdichtung liegt im eingebauten Zustand an den Stirnflächen des Motorblocks und des Zylinderkopfes an. Zwischen Zusatzdichtung und Zylinderkopfdichtung verbleibt somit ein Spalt der zu Undichtigkeiten führen kann.

Der Erfindung liegt die Aufgabe zugrunde, eine gattungsgemäße Zylinderkopfdichtung dahingehend zu verbessern, daß der durch die einzelnen Bauteile sich ergebende Spalt im Bereich des Ketten- oder Räderkastens sicher und zuverlässig abgedichtet wird, wobei im Hinblick auf Reparaturkosten eine Wartungsfreundlichkeit angestrebt wird.

Diese Aufgabe wird erfindungsgemäß dadurch gelöst, daß die Zylinderkopfdichtung am mit dem Ketten- oder Räderkasten korrespondierenden Endbereich stirnseitig eine zusätzliche elastische Dichtung aufweist, welche im eingebauten Zustand sich in den Spalt erstreckt, welcher sich durch die Bauteile toleranzbedingt ergibt und an der Zusatzdichtung anliegt.
Die auf der Stirnseite der Zylinderkopfdichtung sich erstreckende zusätzliche elastische Dichtung ist als eine aus elastomerem Werkstoff gebildete Raupe ausgebildet und weist eine axiale Höhe auf, die etwa der Dicke der Zylinderkopfdichtung entspricht. Auf diese Weise ist es nunmehr möglich den Ketten- oder Räderkasten vom Motorblock zu trennen, ohne daß die Zylinderkopfdichtung gewechselt werden muß, gleichzeitig ist die Trennebene absolut sicher und zuverlässig abgedichtet. Die Elastomer-Raupe ist in der Lage toleranzbedingte Spalten zu überbrücken.

Die Erfindung ist in der Zeichnung dargestellt und wird im folgenden näher erläutert. Es zeigen:
- Fig. 1: eine erfindungsgemäße Zylinderkopfdichtung in der Draufsicht
- Fig. 2: Ausschnitt einer perspektivischen Ansicht der Zylinderkopfdichtung gemäß Fig. 1 im eingebauten Zustand
- Fig. 3: Querschnittsansicht gemäß Ausschnitt II der Fig. 2

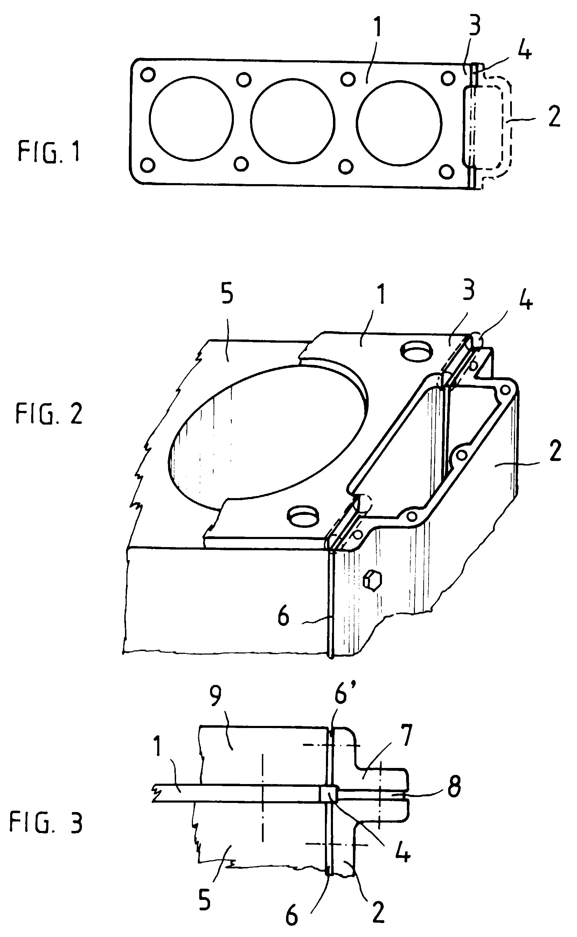

In der Figur 1 ist eine erfindungsgemäße Zylinderkopfdichtung (1) für Brennkraftmaschinen mit einem seitlich an den Motorblock angeschraubten Ketten- oder Räderkasten (2) dargestellt. Die Zylinderkopfdichtung (1) weist an dem mit dem Ketten- oder Räderkasten (2) korrespondierenden Endbereich (3) eine zusätzliche elastische Dichtung (4) auf, die entweder über den gesamten Endbereich (3) oder, wie dargestellt, sich nur an den äußeren Bereichen erstreckt. Wie aus der Figur (2) ersichtlich, wird der Ketten- oder Räderkasten (2) an dem Motorblock (5) seitlich befestigt. Die Abdichtung vom Motorblock (5) erfolgt über eine Dichtung (6). Der Ketten- oder Räderkasten (2) ist zweiteilig ausgebildet, wobei der obere Teil (7) mit dem unteren Teil über eine Zusatzdichtung (8) (Fig. 3) verbunden ist. In der Ebene der Zusatzdichtung (8) erstreckt sich die Zylinderkopfdichtung (1) als Dichtkörper für den Zylinderkopf (9).

Erfindungsgemäß weist die Zylinderkopfdichtung (1) stirnseitig eine elastomere zusätzliche elastische Dichtung (4) auf, die sich in den Spalt erstreckt, welcher sich durch die Bauteile (1,2,5,6,7,8,9) toleranzbedingt ergibt.

## Patentansprüche

1. Zylinderkopfdichtung für eine Brennkraftmaschine mit einem an einem Motorblock (5) seitlich angeschraubten Ketten- oder Räderkasten (2,7) zur Aufnahme der Antriebsmittel zwischen Kurbelwelle und Nockenwelle, wobei der Ketten- oder Räderkasten (2,7) eine Zusatzdichtung (8) in der Ebene der Zylinderkopfdichtung (1) aufweist, dadurch gekennzeichnet, daß die Zylinderkopfdichtung (1) am mit dem Ketten- oder Räderkasten (2,7) korrespondierenden Endbereich (3) stirnseitig eine zusätzliche elastische Dichtung (4) aufweist, welche im eingebauten Zustand sich in den Spalt ertreckt, welcher sich durch die Bauteile (1, 2, 5, 6, 8, 9) toleranzbedingt ergibt und an der Zusatzdichtung (8) anliegt.

2. Zylinderkopfdichtung nach Anspruch 1, dadurch gekennzeichnet, daß die zusätzliche elastische Dichtung (4) als eine aus elastomerem Werkstoff gebildete Raupe ausgebildet ist und eine axiale Höhe aufweist, die etwa der Dicke der Zylinderkopfdichtung (1) entspricht.

## Claims

1. Cylinder head gasket for an internal combustion engine with a chain case or gear box (2, 7), which is bolted on to the side of the engine block (5), for receiving the actuation means between crankshaft and camshaft, the chain case or gear box (2, 7) having a supplementary seal (8) in the plane of the cylinder head gasket (1), **characterised in that** the cylinder head gasket (1) on the end region (3) corresponding with the chain case or gear box (2, 7) has, on its front side, an additional elastic seal (4) which when installed extends into the gap which results from the tolerances of the components (1, 2, 5, 6, 7, 8, 9) and which abuts onto the supplementary seal (8).

2. Cylinder head gasket according to Claim 1, **characterised in that** the supplementary elastic seal (4) is designed as a bead formed from an elastomeric material and has an axial height corresponding roughly to the thickness of the cylinder head gasket (1).

## Revendications

1. Joint de culasse pour un moteur à combustion interne comprenant un carter de chaînes ou d'engrenages (2, 7) vissés latéralement à un bloc moteur (5) pour la réception des moyens d'entraînement entre le vilebrequin et l'arbre à came, le carter de chaînes ou d'engrenages (2, 7) comprenant une garniture d'étanchéité additionnelle (8) dans le plan du joint de culasse (1), caractérisé en ce que le joint de culasse comprend dans la zone d'extrémité (3) correspondant au carter de chaînes ou d'engrenages (2, 7) frontalement une garniture d'étanchéité élastique additionnelle (4), qui dans l'état monté s'étend dans la fente qui provient des tolérances des pièces constitutives (1, 2, 5, 6, 8, 9) et qui est adjacente à la garniture d'étanchéité additionnelle (8).

2. Joint de culasse selon la revendication 1, caractérisé en ce que la garniture d'étanchéité élastique additionnelle (4) est réalisée sous la forme d'un cordon formé à partir d'un matériau élastomère et présente une hauteur axiale qui correspond environ à l'épaisseur du joint de culasse (1).
